# EUROPÄISCHE PATENTSCHRIFT

(11) **EP 1 326 314 B1**
(45) Veröffentlichungstag und Bekanntmachung des Hinweises auf die Patenterteilung: **14.09.2011**
(21) Anmeldenummer: 02028729.8
(22) Anmeldetag: 20.12.2002
(51) Int. Cl.: H02G 3/04

(54) **Wellschlauchanordnung und Wellschlauch dafür**
Corrugated tubing arrangement
Agencement de tube ondulé

(30) Priorität: 04.01.2002 DE 10200186
(43) Veröffentlichungstag der Anmeldung: 09.07.2003
(73) Patentinhaber: FRÄNKISCHE ROHRWERKE Gebr. Kirchner GmbH & Co. KG, 97486 Königsberg (DE)
(72) Erfinder: Margot, Christian, 83400 Hyeres (FR)
(74) Vertreter: Schwabe - Sandmair - Marx

(56) Entgegenhaltungen:
- EP-A- 0 291 418
- DE-A- 10 019 005
- US-A- 6 129 120

## Beschreibung

Die vorliegende Erfindung betrifft eine Wellschlauchanordnung zur Aufnahme von Leitungen oder Kabeln sowie die Verwendung eines Wellschlauches für eine solche Wellschlauchanordnung.

Allgemein betrifft die vorliegende Erfindung die Aufnahme elektrischer Leitungen, beispielsweise von Kabeln mit einem kreisförmigen oder vergleichbar ausgebildeten Leiterkern, von Flachbandkabeln oder dgl., oder von mechanischen Leitungen, beispielsweise zur Führung von ummantelten Seilzügen, zur Weiterleitung von Fluiden, auch von druckbeaufschlagten Fluiden, in einem Wellenschlauch beziehungsweise Wellenrohr. Eine ganz besonders bevorzugte Verwendung betrifft die Aufnahme von Kabeln oder vorgefertigten Kabelbäumen in Wellschläuchen zur Verwendung im Fahrzeugbau, insbesondere Pkw-Fertigung. Wellschläuche im Sinne der nachfolgenden Beschreibung sind zumindest abschnittsweise gewellt und weisen in den gewellten Abschnitten am Außenumfang verlaufende Wellenberge und Wellentäler auf, die den Außen- und den Innenumfang des Wellschlauches festlegen. Solche üblicherweise aus Kunststoff gefertigten Wellschläuche beziehungsweise Wellenröhre können präzise und sicher mit vergleichsweise kleinen Biegeradien verlegt werden und eignen sich deshalb zur präzisen und geschützten Verlegung von Leitungen der eingangs erwähnten Art. Zur montagefreundlichen Aufnahme der Leitungen in einem Wellschlauch ist es auch bekannt, den Wellschlauch in Längsrichtung zu schlitzen, so dass die Leitungen nach Aufklappen der Seitenwände des Wellschlauches entlang des Schlitzes in den Wellschlauchinnenraum eingebracht werden können.

Insbesondere im Kraftfahrzeugbau aber auch bei anderen Anwendungsformen, z.B. Maschinenbau, finden zunehmend Wellschläuche mit nicht-kreisförmigem Profil Verwendung, insbesondere von im Wesentlichen rechteckförmigen oder elliptischen Profilen, da solche Wellschläuche vergleichsweise platzsparend und nicht auftragend verlegt werden können.

Eine gattungsbildende Wellschlauchanordnung ist aus der DE 44 10 706 A1 bekannt und umfasst einen Wellschlauch mit einem im Wesentlichen rechteckförmigen Profil und einem sich insgesamt in Längsrichtung entlang einer Schmalseite erstreckenden Schlitz sowie ein Verbindungsmittel zur Verbindung der sich entlang des Schlitzes erstreckenden Seitenränder des Wellschlauches im Bereich einer Schmalseite desselben.

Zur Ausbildung des Verbindungsmittels ist an einem Seitenrand ein in Längsrichtung verlaufender und sich im Wesentlichen senkrecht dazu erstreckender Vorsprung vorgesehen, dessen Kante von einer korrespondierend ausgebildeten Auswölbung entlang des gegenüberliegenden Seitenrandes des Wellschlauches hintergriffen wird. Bei einem Verbiegen des Wellschlauches geht das Verbindungsmittel auf. Die Herstellung des gattungsbildenden Wellschlauches ist vergleichsweise aufwändig, da die Ausbildung des Verbindungsmittels weitere Prozessschritte erfordert. Ferner ist die gattungsbildende Wellschlauchanordnung nur eingeschränkt montagefreundlich, da vor der Aufnahme der Leitungen ein Verrasten der Verbindungsmittel aktiv verhindert werden muss und ein späteres Öffnen der miteinander verrasteten Verbindungsmittel schwierig ist, da das hintergreifende Verbindungsmittel nur mühsam ergriffen werden kann.

DE 199 43 763 C1 offenbart einen zweistückig ausgebildeten Wellschlauch mit formschlüssig zusammenwirkenden Verbindungsmitteln im Bereich der beiden Schmalseiten des Wellschlauches. Herstellung und Montage des Wellschlauches sind vergleichsweise aufwändig.

Die DE 100 05 315 A1 offenbart einen einstückig ausgebildeten Wellschlauch mit im Wesentlichen rechteckförmigem Profil, wobei ein sich entlang einer Schmalseite erstreckendes hakenartiges Verbindungsmittel einen entsprechenden Vorsprung am gegenüberliegenden Seitenrand des Wellschlauches formschlüssig hintergreift. Beim Verbiegen des Wellschlauches, z.B. beim Verlegen, löst sich das Verbindungsmittel. Die Herstellung des Wellschlauches ist auch vergleichsweise materialaufwändig, da ein Teil der Seitenwand ausgenommen werden muss.

Die EP 0 291 418 A1 bezieht sich auf ein Profilrohr aus Kunststoff, das mit einer Wulst zusammenhängt, die äußerlich von der Rückwand des Profilrohres hervorsteht und über die gesamte Länge des erzeugten Rohres angeordnet ist. Die C-Form des Verschlussprofils entspricht derjenigen der Wulst.

Aufgabe der vorliegenden Erfindung ist es, die gattungsbildende Wellschlauchanordnung dahingehend weiterzubilden, dass diese noch einfacher gefertigt, montiert und verlegt werden kann. Zu diesem Zweck soll auch eine besondere Verwendungsform von Wellschläuchen bereitgestellt werden.

Diese Aufgaben werden gelöst durch eine Wellschlauchanordnung mit den Merkmalen nach Anspruch 1 sowie durch die Verwendung eines Wellschlauches nach Anspruch 21 oder 22. Weitere vorteilhafte Weiterbildungen sind Gegenstand der rückbezogenen Ansprüche.

Vorteilhaft verläuft der insgesamt in Längsrichtung verlaufende Schlitz des Wellschlauches zumindest abschnittsweise im Bereich einer Schmalseite des Wellschlauchs oder eines Scheitelpunktes des Wellschlauchprofils und dass das Verbindungsmittel rohrförmig ausgebildet ist und in der Art einer Abschlusskappe im Bereich einer Schmalseite seitlich auf den Wellschlauch aufsetzbar ist. Somit deckt das Verbindungsmittel den Längsschlitz des Verbindungsschlauches in einfacher Weise ab und verbindet gleichzeitig die beiden sich entlang des Schlitzes erstreckenden Seitenränder des Wellschlauches zuverlässig. Vorteilhaft ist ferner, dass durch einfaches Aufschieben bzw. Aufsetzen und Abziehen des Verbindungsmittels eine Verbindung der beiden Seitenränder jederzeit und in einfacher Weise hergestellt und gelöst werden kann. Die Wellschlauchanordnung ist deshalb besonders montagefreundlich. Da das Verbindungsmittel an die Kontur des Wellschlauches angepasst ist, löst sich das Verbindungsmittel beim Verbiegen des Wellschlauches nicht. Das Verbindungsmittel verbindet also vorteilhaft zuverlässig. Da sowohl für den Wellschlauch als auch für das rohrförmige Verbindungsmittel Grundkörper mit vergleichsweise einfacher Geometrie verwendet werden können und der Längsschlitz in dem Wellschlauch in einfacher Weise bewirkt werden kann, kann die Wellschlauchanordnung in vorteilhaft einfacher und kostengünstiger Weise hergestellt werden.

Unter dem Begriff nicht-kreisförmiges Profil sei nachfolgend insbesondere ein elliptisches oder im Wesentlichen rechteckförmiges Profil verstanden, also ein Profil, das zumindest eine Schmalseite aufweist, entlang der das Profil des Wellschlauches eine minimale Grundabmessung hat. Bei einer Ellipse oder vergleichbaren hyperbelartigen Profilform wäre also beispielsweise die Schmalseite ein Bereich maximaler Krümmung der Wandung des Wellschlauchs. Der insgesamt in Längsrichtung verlaufende Längsschlitz verbindet die beiden Enden des Wellschlauches und erstreckt sich zumindest abschnittsweise im Bereich einer Schmalseite, beispielsweise im Bereich eines Scheitelpunktes des Wellschlauchprofils, wo die Steigung des Wellschlauchprofils einen Umkehrpunkt aufweist. Für eine ellipsenförmig ausgebildete Seitenwandung des Wellschlauches, oder im Wesentlichen in der Mitte der Schmalseite bei einem kreisförmigen oder rechteckförmigen seitlichen Abschluss des Wellschlauches. Für das zum Einbringen der Leitungen erforderliche Aufklappen der beiden Seitenwände des Wellschlauches entlang des Längsschlitzes stehen somit maximale Hebelkräfte zur Verfügung und wird das Material des Wellschlauches geringstmöglich verformt.

Somit wird das Verbindungsmittel zumindest abschnittsweise auf eine Schmalseite oder einen Scheitelpunkt des Wellschlauchprofils aufgesetzt. Das rohrförmige Verbindungsmittel ist zweckmäßig an die Außenkontur des Wellschlauches im Bereich der Schmalseite angepasst, um eine stabile Verbindung zu ermöglichen. Der Begriff "rohrförmig" im Sinne dieser Anmeldung bezeichnet ein Hohlkörperprofil, das zur Umgreifung der Schmalseite oder der Seite mit dem Scheitelpunkt des Wellschlauches geeignet ist, also z.B. ein kreisförmiges, elliptisches, quadratisches oder rechteckförmiges Profil des Verbindungsmittels. Vorteilhaft ist im Bereich der Schmalseite oder des Scheitelpunkts, dort wo das Verbindungsmittel auf den Wellschlauch aufgesetzt wird, um den Schlitz des Wellschlauches abzudecken und die Seitenränder des Wellschlauches miteinander zu verbinden, ein Haltemittel vorgesehen, um ein seitliches Abziehen des Verbindungsmittels zumindest zu behindern oder gar zu verhindern. Vorteilhaft ist, dass die Verbindung sicher aufrechterhalten bleibt, etwa beim Verlegen oder Verbiegen des Wellschlauches mit darin aufgenommenen Leitungen. Mit dem Haltemittel steht ferner ein Freiheitsgrad bei der Auslegung der Wellschlauchanordnung zur Verfügung, um diese an die voraussichtlich bei dem angedachten Verwendungszweck vorherrschenden seitlichen Abziehkräfte anzupassen.

Vorteilhaft wird das Verbindungsmittel kraftschlüssig auf dem Wellschlauch gehalten, wozu das Profil des Verbindungsmittels und des Wellschlauchs im Bereich der Schmalseite oder des Scheitelpunkts mit dem Schlitz zueinander korrespondierend und eng aneinander anliegend ausgebildet sind. Bevorzugt weist der Wellschlauch im Bereich der Schmalseite mit dem Schlitz eine Ausbauchung und eine sich daran anschließende Verjüngung auf. Das rohrförmige korrespondierend ausgebildete Verbindungsmittel ist in Längsrichtung geschlitzt, so dass Seitenränder des Verbindungsmittels Seitenwandabschnitte des Wellschlauches im Bereich der Verbindung kraftschlüssig klemmen. Somit dient das Verbindungsmittel gleichzeitig als Klemmmittel, um ein unbeabsichtigtes Aufweiten des Wellschlauches im Bereich des Schlitzes zu verhindern.

Vorteilhaft kann das Verbindungsmittel und der Wellschlauch im Bereich der Schmalseite oder des Scheitelpunkts ein im Wesentlichen kreisförmiges Profil aufweisen, wobei der Kreisbogenwinkel der Schmalseite des Wellschlauches größer als 180° und der Öffnungswinkel des Längsschlitzes des Verbindungsmittels mit kreisförmigem Profil korrespondierend hierzu kleiner als 180° ist. Somit wird das Verbindungsmittel beim Aufschieben auf die Schmalseite zunächst aufgeweitet. Beim weiteren Aufschieben des Verbindungsmittels nähern sich die beiden Seitenränder desselben aufgrund bevorzugt elastischer Eigenschaften des Verbindungsmittels wieder aneinander an, um so die Seitenränder des Wellschlauches zu klemmen. Bevorzugt liegt der Öffnungswinkel des Längsschlitzes des Verbindungsmittels im Bereich zwischen etwa 60° und 100°, noch bevorzugter im Bereich zwischen etwa 70° und 90° und beträgt dieser noch bevorzugter etwa 80°. Der vorstehend beschriebene Kraftschluss kann jedoch auch für andere Profile des Wellschlauchs im Bereich der Schmalseite bewirkt werden, etwa für ellipsenartig oder trapezförmig aufgeweitete Schmalseiten des Wellschlauches.

Vorteilhaft kann das Verbindungsmittel zusätzlich oder alternativ auf den beiden Seiten des Längsschlitzes Erhöhungen bzw. Vertiefungen aufweisen, die formschlüssig in hierzu korrespondierende Vertiefungen bzw. Erhöhungen auf dem Wellschlauch im Bereich der Schmalseite mit dem darin vorgesehenen Schlitz eingreifen. Diese einfache Maßnahme erhöht die Stabilität der Verbindung weiter und bewirkt gleichzeitig eine Verdrehsicherung, so dass die Verbindung nicht durch versehentliches Verdrehen des Verbindungsmittels entlang des Wellschlauches wieder gelöst werden kann. Die Erhöhungen bzw. Vertiefungen können beispielsweise kreisförmig, ellipsenförmig, rechteckförmig oder dergleichen ausgebildet sein.

Vorteilhaft kann das Verbindungsmittel zusätzlich oder alternativ durch Formschluss im Bereich der Schmalseite des Wellschlauches oder des Scheitelpunkts des Wellschlauchprofils erhalten werden. Zweckmäßig weist der Wellschlauch hierzu im Bereich der zumindest einen Schmalseite oder des Scheitelpunkts sich in Längsrichtung erstreckende Umfangsvorsprünge auf, die von Seitenrändern des Verbindungsmittels hintergriffen werden. Hierzu können die Seitenränder des Verbindungsmittels hakenartig verformt sein.

Vorteilhaft ist auf dem Wellschlauch auf einer oder auf beiden Seiten des Schlitzes im Bereich der Schmalseite oder des Scheitelpunkts ein Mittel vorgesehen, um eine Verdrehsicherung zu bewirken, so dass die Verbindung nicht durch unbeabsichtigtes Verdrehen des Verbindungsmittels entlang des Wellschlauches gelöst werden kann, etwa beim Verlegen der Wellschlauchanordnung mit darin aufgenommenen Leitungen. Gemäß einer Ausführungsform kann die Verdrehsicherung durch sich im Wesentlichen in Längsrichtung im Bereich der mit einem Schlitz versehenen Schmalseite erstreckende Erhebungen ausgebildet sein. Die Erhebungen dienen als Anschlagmittel für die Seitenränder des längsgeschlitzten rohrartigen Verbindungsmittels und Verhindern so ein Weiterschieben bzw. Verdrehen des Verbindungsmittels entlang des Umfangs des Wellschlauchs. Alternativ kann die Verdrehsicherung auch durch entsprechend verlaufende Vertiefungen auf dem Außenumfang des Wellschlauches ausgebildet sein, so dass auf dem Außenumfang des Wellschlauches eine sich in Längsrichtung erstreckende Kante ausgebildet wird, die von Seitenrändern des längsgeschlitzten Verbindungsmittels hintergriffen werden. Zu diesem Zweck können die Seitenränder beispielsweise auch hakenartig oder vergleichbar geformt sein.

Grundsätzlich kann das ein Abziehen des Verbindungsmittels behindernde oder verhindernde Haltemittel auch als übliche Rastverbindung ausgebildet sein, zu welchem Zweck auf dem Außenumfang des Wellschlauches, vorzugsweise zu beiden Seiten des Schlitzes auf der Schmalseite, Rastkörper und auf dem Innenumfang des Verbindungsmittels hierzu korrespondierend ausgebildete Rastkörper vorgesehen sein können, etwa in der Form von Druckknöpfen oder Verhakungsmittel. Diese können gleichzeitig als Verdrehsicherung dienen.

Besonders bevorzugt ist auch das Verbindungsmittel zumindest abschnittsweise mit Wellungen versehen, weist also zumindest abschnittsweise Wellenberge und Wellentäler auf, die den Außenumfang bzw. Innenumfang des Verbindungsmittels festlegen. Zweckmäßig sind diese Wellungen korrespondierend zu den Wellungen des Wellschlauches im Verbindungsbereich des Wellschlauches mit dem Verbindungsmittel ausgebildet, so dass diese formschlüssig ineinander greifen können. Somit ist in einfacher Weise eine axiale Verschiebung des Verbindungsmittels verhindert. Gleichzeitig kann auch eine relative Axialverschiebung der Wellungen des Wellschlauchstücks zu beiden Seiten des Längsschlitzes verhindert werden. Somit ist die Wellschlauchanordnung ganz besonders formstabil auch beim Verlegen und Verbiegen.

Ganz besonders bevorzugt weist der Wellschlauch ein im Wesentlichen rechteckförmiges Profil auf, so dass die Wellschlauchanordnung vorteilhaft wenig aufträgt, wenn diese verlegt wird, beispielsweise im Bodenbereich einer Fahrgastzelle.

Vorteilhaft ist der Wellschlauch entlang zumindest einer Schmalseite oder dort, wo sich der Scheitelpunkt des Wellschlauchprofils befindet, im Wesentlichen kreisförmig abgeschlossen unter Ausbildung einer sich in Längsrichtung des Wellschlauches erstreckenden seitlichen Aufnahme für Leitungen. Der Kreisbogenwinkel der zumindest einen seitlichen Aufnahme ist bevorzugt größer als 180°, so dass ein seitliches Abziehen des Verbindungsmittels in einfacher Weise behindert oder verhindert werden kann, wie vorstehend ausgeführt.

Vorteilhaft weist der Wellschlauch zwei seitliche kreisförmig ausgebildete Aufnahmen auf. In diesen können stromführende Leitungen unter minimaler gegenseitiger Störung aufgenommen werden. Insgesamt ist ein solcher Wellschlauch somit hundeknochenartig ausgebildet. Zwischen den Schmalseiten mit der seitlichen Aufnahme befindet sich somit ein zentraler Aufnahmebereich, der gleichfalls zur Aufnahme von Leitungen dienen kann. Selbstverständlich kann der Wellschlauch auch mehr solcher Aufnahmen umfassen, beispielsweise drei, in welchem Fall das Wellschlauchprofil insgesamt pyramidenförmig ist.

Zweckmäßig nähern sich die Seitenwandungen des Wellschlauches im zentralen Aufnahmebereich einander an oder berühren sich gar, so dass im zentralen Aufnahmebereich Leitungen in einfacher Weise geklemmt werden können. Zu diesem Zweck können die Seitenwände im Zentralbereich auch konkav gewölbt sein.

Vorteilhaft verlaufen die Seitenwände des Wellschlauches in einem zentralen Bereich im Wesentlichen parallel zueinander in gegenseitiger Anlage oder unter Einhaltung einer gewissen lichten Weite. Die so ausgebildete insgesamt rechteckförmige Aufnahme kann als Klemmbereich für Leitungen mit im Wesentlichen rechteckförmigen Profil verwendet werden und eignet sich insbesondere zum Klemmen von Flachbandkabeln. Natürlich kann der zentrale Klemm- bzw. Aufnahmebereich in Entsprechung zu beliebigen Leitungsprofilen ausgebildet sein, etwa in Entsprechung zum kreisförmigen oder elliptischen Profil von Kabelbäumen, wie sie im modernen Fahrzeugbau verwendet werden.

Um die Flexibilität der Wellschlauchanordnung noch weiter zu erhöhen, kann die Wandstärke des Wellschlauches in einem zentralen Bereich geringer gewählt werden als im Bereich der Schmalseite bzw. Schmalseiten oder dort, wo sich der Scheitelpunkt des Wellschlauchprofils befindet. Zusätzlich oder alternativ können in dem zentralen Bereich auch die Wellungen bzw. Wellenberge auf dem Außenumfang des Wellschlauches höher ausgebildet sein als im Bereich der Schmalseite bzw. Schmalseiten. Diese einfachen Maßnahmen begünstigen insbesondere ein Verbiegen des Wellschlauches senkrecht zu einer durch den zentralen Bereich ausgebildeten Mittelebene.

Vorteilhaft läuft der Schlitz des Wellschlauches nicht einfach als Längsschlitz entlang einer Schmalseite oder einer Seite mit einem Scheitelpunkt des Profils, sondern verläuft vielmehr zickzackförmig oder wendeltreppenartig zwischen einer Schmalseite und der gegenüberliegenden Schmalseite des Wellschlauches.

Da das Verbindungsmittel bevorzugt nur im Bereich der Schmalseiten oder dort, wo sich ein Scheitelpunkt des Wellschlauchprofils befindet, kappenartig auf den Längsschlitz aufgesetzt ist, wird der Schlitz in den sonstigen Bereichen bevorzugt nicht abgedeckt. Diese Bereiche stehen zum Herausführen von Leitungen an nahezu beliebigen Orten der Wellschlauchanordnung zur Verfügung. Diese Bereich können beispielsweise bei einem rechteckförmigen Profil sich auf den Breitseiten des Profils befinden, wo die Leitungen durch einfaches Aufweiten der Seitenwände des Wellschlauches, ggf. durch zusätzliche Ausbildung einer Aussparung darin, herausgeführt werden können. Aufgrund des zickzackförmigen oder wendeltreppenartigen Verlaufes brauchen die Verbindungsmittel auch nicht an sämtlichen Schmalseiten, wo der Schlitz in Längsrichtung verläuft, aufgesetzt werden. Somit können die Leitungen auch an den Schmalseiten herausgeführt werden. Durch geeignete Auslegung der zu verlegenden Kabelbäume und des Verlaufes des Schlitzes in dem Wellschlauch können die Leitungen somit an nahezu beliebigem Ort aus der Wellschlauchanordnung herausgeführt werden, was Materialkosten und Montagekosten sparen hilft.

Die Wellschlauchanordnung basiert somit auf der Kombination einfacher geometrischer Grundkörper, nämlich eines Wellschlauches und eines rohrartigen und längsgeschlitzten Verbindungsmittels, die je für sich vertrieben werden können.

Vorteilhaft ist die Verwendung eines Wellschlauches, der wie vorstehend beschrieben ausgebildet ist, für eine erfindungsgemäße Wellschlauchanordnung zur Aufnahme von Leitungen. Vorteilhaft ist die Verwendung eines Wellschlauches mit nicht kreisförmigem Profil und zumindest einer Schmalseite und einem insgesamt in Längsrichtung verlaufenden Längsschlitz als Wellschlauch zur Aufnahme von Leitungen in einer Wellschlauchanordnung. Solche Wellenschläuche können als einfache Endlosware gesondert vertrieben und bevorratet werden.

Nachfolgend werden bevorzugte Ausführungsformen der vorliegenden Erfindung unter Bezugnahme auf die beigefügten Zeichnungen beschrieben, worin:
- Fig. 1: schematisch eine erfindungsgemäße Wellschlauchanordnung in einer perspektivischen Ansicht zeigt;
- Fig. 2: im Querschnitt eine Variante der Wellschlauchanordnung gemäß Fig. 1 zeigt;
- Fig. 3: im Querschnitt und in einer Seitenansicht die Wellschlauchanordnung gemäß Fig. 1 zeigt;
- Fig. 4: in einem Querschnitt und in einer Seitenansicht die Variante gemäß Fig. 2 ohne darin aufgenommene Leitungen zeigt;
- Fig. 5: eine zweite Ausführungsform einer erfindungsgemäßen Wellschlauchanordnung im Querschnitt und in einer Seitenansicht darstellt;
- Fig. 6: eine Variante der Ausführungsform gemäß Fig. 5 darstellt;
- Fig. 7: die zweite Ausführungsform gemäß Fig. 5 mit einem darin aufgenommenen Flachbandkabel darstellt;
- Fig.8: eine dritte Ausführungsform einer Wellschlauchanordnung gemäß der vorliegenden Erfindung darstellt;
- Fig. 9: eine Variante eines Haltemittels darstellt, das ein seitliches Abziehen des Verbindungsmittels zumindest verhindern soll; und
- Fig. 10: eine weitere Variante mit zwei seitlich aufgesetzten Verbindungsmitteln zeigt, die auch als Befestigungsmittel oder Halteclips dienen können.

In den Figuren bezeichnen identische Bezugszeichen identische oder äquivalente Bauelemente oder Bauelementgruppen.

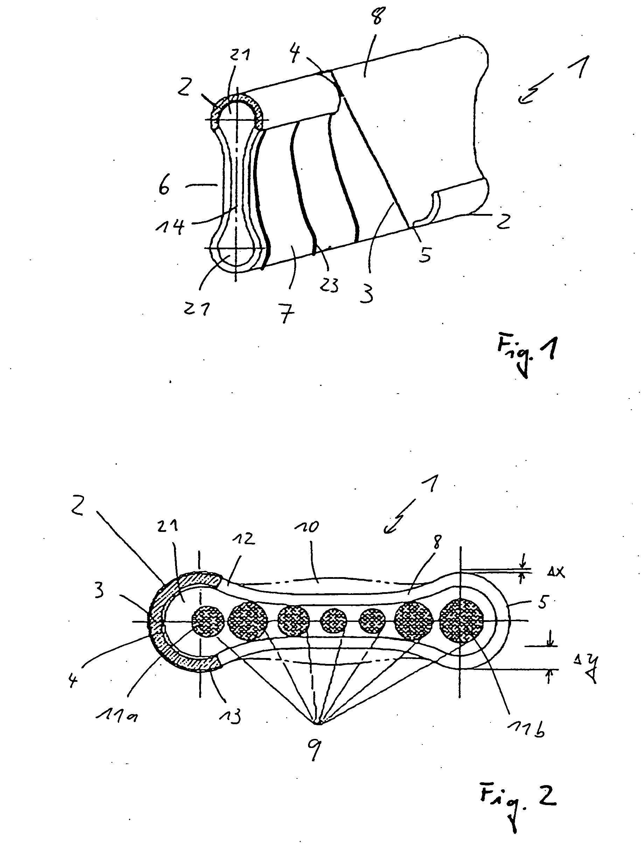

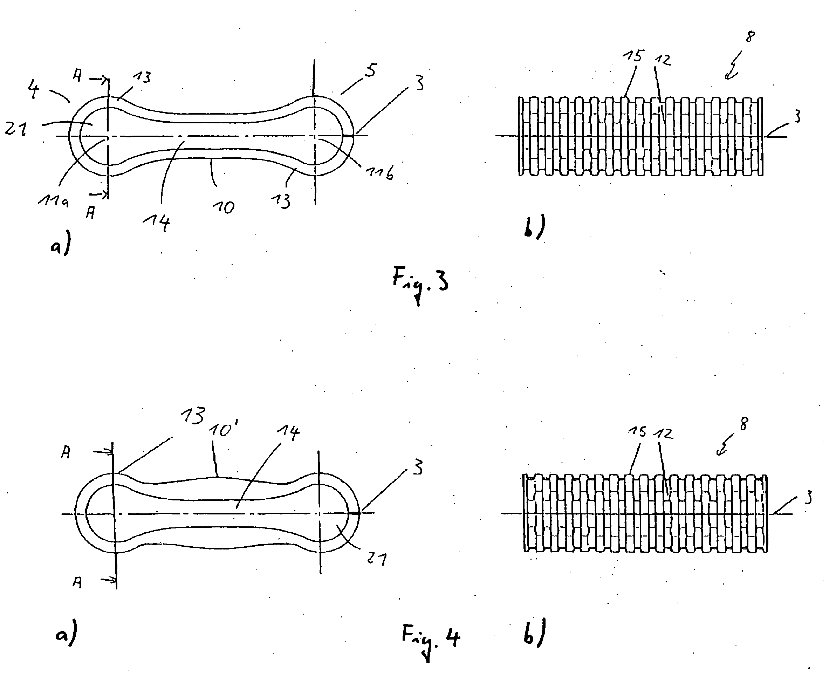

Fig. 1 zeigt in schematischer und perspektivischer Ansicht eine erste Ausführungsform einer Wellschlauchanordnung 1 gemäß der vorliegenden Erfindung. Diese umfasst einen Wellschlauch bzw. ein Wellrohr 8 mit nicht-kreisförmigem Profil und zwei rohrförmig ausgebildete Verbindungsmittel 2, die kappenartig auf die obere Schmalseite 4 und die untere Schmalseite 5 des Wellschlauches 8 aufgesetzt sind, um die sich entlang des insgesamt in Längsrichtung verlaufenden Schlitzes erstreckenden Seitenränder des Wellschlauches im Bereich einer Schmalseite 4, 5 zu verbinden. Allgemeiner ausgedrückt weist die Steigung des Wellschlauchprofils im Verbindungsbereich einen Scheitelpunkt bzw. Umkehrpunkt der Steigung auf. Der Wellschlauch 8 ist zumindest dort, wo die Verbindungsmittel 2 aufgesetzt sind, mit sich in Umfangsrichtung des Wellschlauches 8 erstreckenden Wellenbergen und Wellentälern 23 versehen, die beispielsweise in der schematischen Draufsicht gemäß Fig. 3b gezeigt sind.

Ein Schlitz 3 verläuft im vorderen Bereich auf der oberen Schmalseite 4, verläuft dann zwischen den beiden Verbindungsmitteln 2 diagonal von der oberen Schmalseite 4 zu der unteren Schmalseite 5 und verläuft dann entlang der unteren Schmalseite 5 im Bereich des hinteren Verbindungsmittels 2. Anschließend kann der Schlitz 3 auf der selben Breitseite des Wellschlauches 8 zickzackförmig oder auf der gegenüberliegenden Breitseite des Wellschlauches 8 wendeltreppenartig zu der oberen Schmalseite 4 zurückgeführt werden.

Der Wellschlauch 8 dient zur Aufnahme von mechanischen oder elektrischen Leitungen im zentralen Aufnahmebereich 14 und/oder in den seitlichen in Längsrichtungen verlaufenden Aufnahmen 21. Zum Einbringen der Leitungen können die Seitenwände des Wellschlauches 8 entlang des Schlitzes 3 aufgeklappt werden. Aufgrund der elastischen Materialeigenschaften des Wellschlauches klappen die Seitenwände nach Einbringen der Leitungen von alleine in ihre Ruhelage zurück. Die im Querschnitt in Fig. 2 gezeigten Leitungen 9 können an den beiden Stirnseiten der Wellschlauchanordnung 1 oder an beliebiger Stelle entlang des Schlitzes 3 aus der Wellschlauchanordnung 1 herausgeführt werden. Zu diesem Zweck könnend die Seitenwände des Wellschlauches entlang des Schlitzes 3 geringfügig aufgeklappt werden und dabei beispielsweise die herausgeführte Leitung klemmen. Zum Vermeiden eines Abknickens der Leitung kann auch eine nicht dargestellte Ausnehmung am Schlitz 3 nahe der Stelle, wo die Leitung herausgeführt werden sollen, vorgesehen sein. Sollen die Leitungen an der oberen oder unteren Schmalseite 4, 5 herausgeführt werden, kann auch ein Verbindungsmittel 2 weggelassen werden. Aufgrund der Vielzahl von Verbindungsmitteln 2 entlang des Wellschlauches 8 kann dennoch eine sichere Verlegung der Wellschlauchanordnung 1 sicher gestellt werden.

Die Verbindungsmittel 2 decken im Bereich der jeweiligen Schmalseite 4, 5 den Schlitz 3 ab und halten gleichzeitig die beiden Seitenwände des Wellschlauches 8 entlang des Schlitzes 3 zusammen. Somit bleiben die in dem Wellschlauch 8 aufgenommen Leitungen auch beim Verlegen und Verbiegen des Wellschlauches 8 sicher geführt.

Fig. 2 zeigt schematisch einen Querschnitt durch eine Variante der Ausführungsform gemäß Fig. 1, bei der Wellungen 10 in einem zentralen Bereich hochgezogen sind, was nachfolgend noch ausführlicher erläutert wird. Insgesamt weist die Wellschlauchanordnung 1 ein rechteckförmiges Profil auf, mit zwei seitlichen Aufnahmen 21 entlang den Schmalseiten 4, 5 und einem zentralen Aufnahmebereich 14, die beide zur Aufnahme der schematisch angedeuteten elektrischen und/oder mechanischen Leitungen 9 dienen können. In Fig. 2 verläuft der Schlitz entlang der oberen Schmalseite 4 in Längsrichtung des Wellschlauches 8 nahe des oberen Scheitelpunkts der seitlichen Aufnahme 21 beziehungsweise in der Mittelebene der Wellschlauchanordnung 1. Die seitlichen Aufnahmen 21 haben insgesamt einen im wesentlichen kreisförmigen Querschnitt, wobei der Winkel des den Außenumfang der Aufnahme 21 beschreibenden Kreisbogens größer als 180° ist, bevorzugt im Bereich von etwa 260° bis 300° liegt, noch bevorzugter im Bereich von etwa 270° bis 290° liegt und noch bevorzugter etwa 280° beträgt. Die Orte 11a und 11b geben das Zentrum der kreisförmigen seitlichen Aufnahme 21 an.

Im Bereich der linken Aufnahme 21 umgreift der insgesamt rohrförmig ausgebildete bzw. ein Hohlkörperprofil aufweisende Körper 2 die Seitenwände des Wellschlauches 8 zu beiden Seiten des Schlitzes 3. Somit werden die Seitenwände des Wellschlauches entlang des Schlitzes 3 miteinander verbunden. Gleichzeitig wird der Schlitz 3 bedeckt. Wie Fig. 2 entnehmbar ist, kann das Verbindungsmittel 2 aus einem rohrförmigen Grundkörper, z.B. mit kreis- oder rechteckförmigen Profil, durch Ausbildung eines entsprechenden Längsschlitzes ausgebildet werden. Das Profil des rohrförmigen Verbindungsmittels 2 ist so gewählt, dass der Innenumfang enganliegend an das Profil der Aufnahme 21 beziehungsweise des Wellschlauches 8 im Bereich der jeweiligen Schmalseite 4, 5 angepasst ist. Wie Fig. 2 entnommen werden kann, sind die Schmalseiten 4, 5 nach außen hin radial gewölbt und verjüngen sich zum zentralen Bereich 14 hin. Das die seitliche Aufnahme 21 umgreifende Verbindungsmittel 2 wird deshalb kraftschlüssig auf dem Wellschlauch gehalten. Der dargestellte Klemmbereich 13, in welchem sich die seitliche Aufnahme 21 wieder verjüngt, dient somit als Haltemittel, um ein seitliches Abziehen des Verbindungsmittels 2 zu behindern. Ein entsprechend wirkendes Haltemittel kann auch für andere Profilformen der seitlichen Aufnahme 21 ausgebildet werden, etwa für elliptische oder trapezförmige seitliche Aufnahmen, wie dem Fachmann ohne weiteres ersichtlich sein wird.

Wie der Fig. 2 entnommen werden kann, ist der Öffnungswinkel des Längsschlitzes des rohrförmig ausgebildeten Verbindungsmittels 2 kleiner als 180°, damit die seitliche Aufnahme 21 geklemmt und ein Haltemittel ausgebildet werden kann. Bevorzugter liegt der vorgenannte Öffnungswinkel im Bereich zwischen etwa 60° und 100°, noch bevorzugter im Bereich von etwa 70° und 90°. Noch bevorzugter beträgt der Öffnungswinkel etwa 80°. Zum seitliche Aufschieben des Verbindungsmittels 2 auf die seitliche Aufnahme 21 beziehungsweise die entsprechende Schmalseite 4, 5 werden die elastischen Seitenwände des Verbindungsmittels 2 geringfügig aufgeweitet. Beim weiteren Aufschieben des Verbindungsmittels 2 nähern sich die beiden Seitenränder des Verbindungsmittels wieder an, um so die Aufnahme 21 eng anliegend zu umgreifen. Die Angabe x bezeichnet die Wandstärke des Verbindungsmittels 2.

Selbstverständlich kann das Verbindungsmittel auf beiden Seiten des Längsschlitzes auch Erhöhungen beziehungsweise Vertiefungen aufweisen, die formschlüssig in hierzu korrespondierende Vertiefungen beziehungsweise Erhöhungen auf dem Wellschlauch im Bereich der jeweiligen Schmalseite eingreifen, um ein seitliches Abziehen und ein axiales Verschieben des Verbindungsmittels 2 zu behindern oder verhindern. Beispielsweise können kreisförmige, ovale oder rechteckförmige Erhöhungen beziehungsweise Vertiefungen vorgesehen sein. Alternativ oder zusätzlich können nicht dargestellte Rastmittel oder Verhakungsmittel in diesem Bereich vorgesehen sein. Bei einer solchen Ausführungsform genügt es, dass das Verbindungsmittel 2 den Längsschlitz abdeckt, so dass der Öffnungswinkel des Längsschlitzes des Verbindungsmittels 2 auch größer als 180° sein kann beziehungsweise der Kreisbogenwinkel der seitlichen Aufnahme 21 kleiner als 180° sein kann.

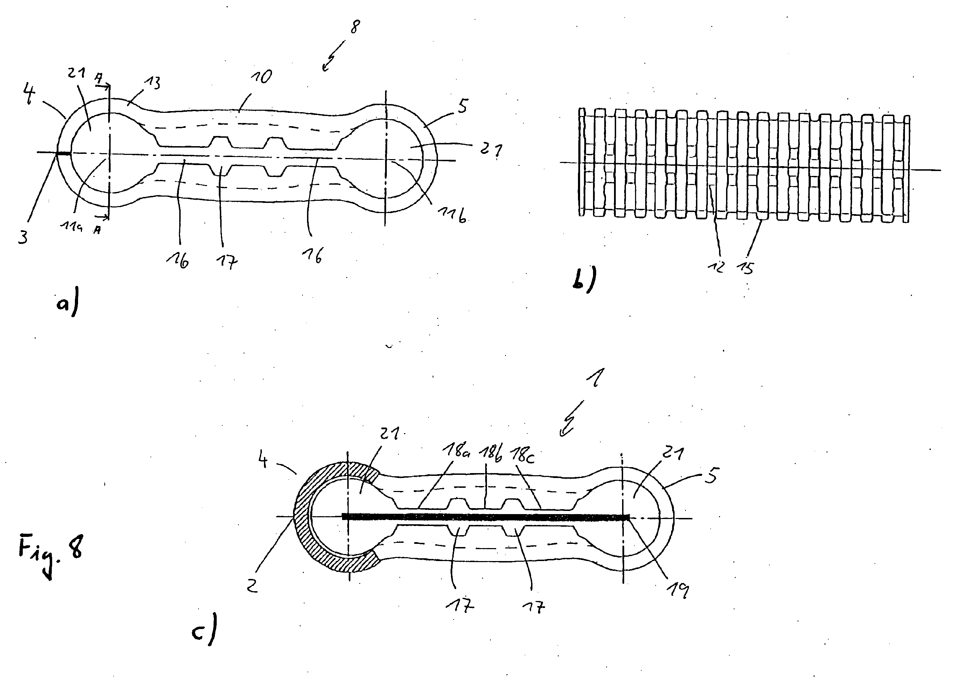

Wie der Fig. 2 weiter entnehmbar ist, sind die Seitenwände des Wellschlauches 8 im zentralen Bereich konkav einwärts gewölbt. In dem zentralen Bereich können die Seitenwände des Wellschlauches 8 auch im wesentlichen parallel zueinander verlaufen, was nachfolgend anhand der Fig. 8 noch näher beschrieben wird. Die beiden Seitenwände können in dem Wellschlauch aufgenommene Leitungen 9 auch klemmen, zu welchem Zweck die lichte Weite der Seitenwände im Zentralbereich sehr klein ist oder gar verschwinden kann. Die elastischen Seitenwände können auch unter Vorspannung gegeneinander anliegen. Das Maß Δy am rechten Bildrand von Fig. 2 gibt an, wie weit die Seitenwände im zentralen Bereich einwärts gewölbt sind. Zur Erhöhung der Flexibilität, speziell bei rechteckförmigem Profil des Wellschlauches 8, können die Wellungen 10 im zentralen Bereich radial auswärts verlängert sein.

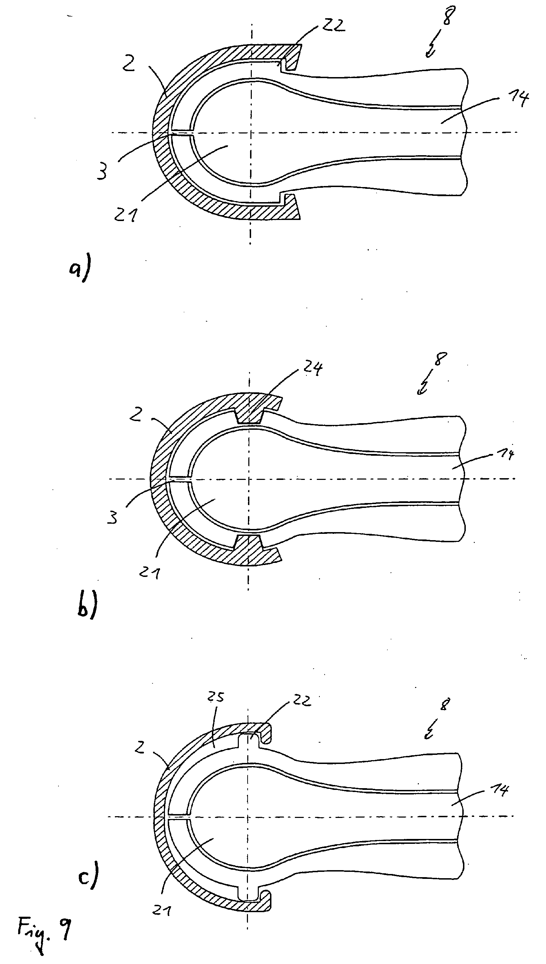

Zur Ausbildung eines Haltemittels, um ein seitliches Abziehen des Verbindungsmittels 2 zu behindern oder zu verhindern, können im Bereich der jeweiligen Schmalseiten auch in Längsrichtung sich erstreckende Umfangsvorsprünge vorgesehen sein, die von Seitenrändern oder Vorsprüngen des Verbindungsmittels 2 hintergriffen werden. Hierzu können die Seitenränder hackenartig verformt sein, wie in Fig. 9a und Fig. 9c schematisch gezeigt. Gemäß Fig. 9b weist der Wellschlauch im Bereich der Schmalseite eine Längsnut auf, in die ein Vorsprung 24 des Verbindungsmittels 2 eingreift.

Fig. 3a zeigt den Wellschlauch 8 gemäß Fig. 1 in einem Querschnitt, Fig. 3b zeigt einen Längsschnitt des Wellschlauches 8 gemäß Fig. 3a entlang der Linie A-A gemäß Fig. 3a. Wie Fig. 3 entnehmbar ist, weist der Wellschlauch 8 Wandabschnitte 15 mit normalen Wellungen und radial weiter innen gelegene Abschnitte 12 mit radial auswärts weiter vorgezogenen Wellungen 12 auf. Am Übergangsbereich zwischen den Abschnitten 12 und 15 wird somit eine radial auswärts vorstehende und sich in Längsrichtung des Wellschlauchs 8 erstreckende Erhebung ausgebildet, die als Anschlagmittel für die Seitenränder des längs geschlitzten Verbindungsmittels 2 gemäß Fig. 2 dienen. Das an beiden Erhebungen anliegende Verbindungsmittel 2 kann somit nicht in Umfangsrichtung des Wellschlauches 8 verdreht beziehungsweise verschoben werden. Somit ist eine in Umfangsrichtung des Wellschlauches 8 gesicherte Befestigung (Verdrehsicherung) des Verbindungsmittel 2 gewährleistet. Selbstverständlich können die Wellungen des radial innen angeordneten Abschnittes 12 radial auch weniger stark vorstehen als die Wellungen des Abschnittes 15, so dass insgesamt eine sich in Längsrichtung des Wellschlauches erstreckende Vertiefung ausgebildet wird. Bei dieser Variante können die Seitenränder des längs geschlitzten Verbindungsmittels 2 gemäß Fig. 2 jeweils eine Kante im Bereich der Vertiefung hintergreifen, um eine Verdrehsicherung des Verbindungsmittels 2 zu bewirken. Hierzu können die Seitenränder des Verbindungsmittels 2 beispielsweise hakenartig verformt sein, wie schematisch für eine andere Variante in Fig. 9 gezeigt.

Die Fig. 4 zeigt in einem Querschnitt (Fig. 4a) und in einem Längsschnitt (Fig. 4b) die Ausführungsform gemäß Fig. 2 ohne darin aufgenommene Leitungen, bei der die Wellenberge 10' im zentralen Bereich 14 hochgezogen sind.

Zur Ausbildung der Verdrehsicherung können im Bereich der Aufnahme 21 beziehungsweise der jeweiligen Schmalseite 4, 5 auch sich in Längsrichtung des Wellschlauches 8 erstreckende Umfangsvorsprünge 22 vorgesehen sein, wie in Fig. 9 schematisch dargestellt. Die Umfangsvorsprünge 22 werden von Seitenrändern des Verbindungsmittels 2 hintergriffen. Hierzu können die Seitenränder des Verbindungsmittels 2 und/oder der Umfangsvorsprünge 22 hakenartig verformt sein. In der Anordnung gemäß Fig. 9 wird gleichzeitig die Umfangslage der Seitenwände des Wellschlauches 8 im Bereich der Aufnahme 21 fixiert. Die Seitenwände können so auch geklemmt werden.

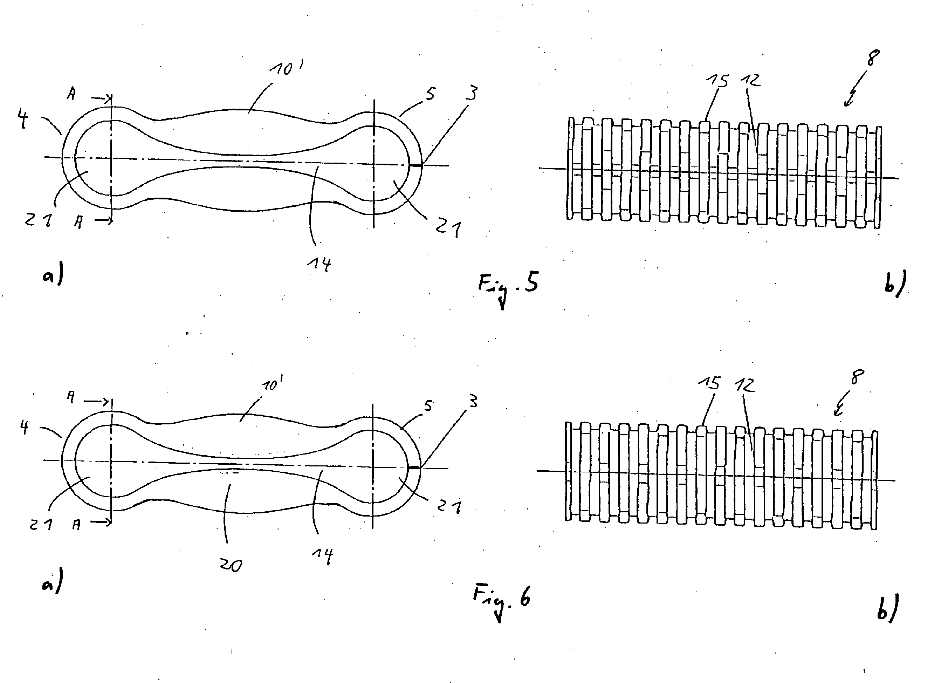

Die Fig. 5a und 5b zeigen eine weitere Ausführungsform des Wellschlauches 8 in einem Querschnitt und in einem Längsschnitt entlang der Linie A-A gemäß Fig. 5a. Gemäß Fig. 5a sind die seitlichen Aufnahmen 21 tropfenartig ausgebildet und verjüngen sich zur Mitte hin wieder, so dass ein Verbindungsmittel 2 gemäß Fig. 2 kraftschlüssig auf der jeweiligen Schmalseite 4, 5 gehalten werden kann. Im zentralen Bereich 14 laufen die Seitenwände des Wellschlauches konkav aufeinander zu, wobei die lichte Weite zwischen den Seitenwänden stets verschieden von Null ist. In dem zentralen Bereich sind die Wellungen 10' radial auswärts vorgezogen, um die Flexibilität des Wellschlauches noch weiter zu erhöhen.

Die Fig. 6a und 6b zeigen eine Variante der Ausführungsform gemäß den Fig. 5a und 5b in einem Querschnitt und einem Längsschnitt entlang der Linie A-A gemäß Fig. 6a.

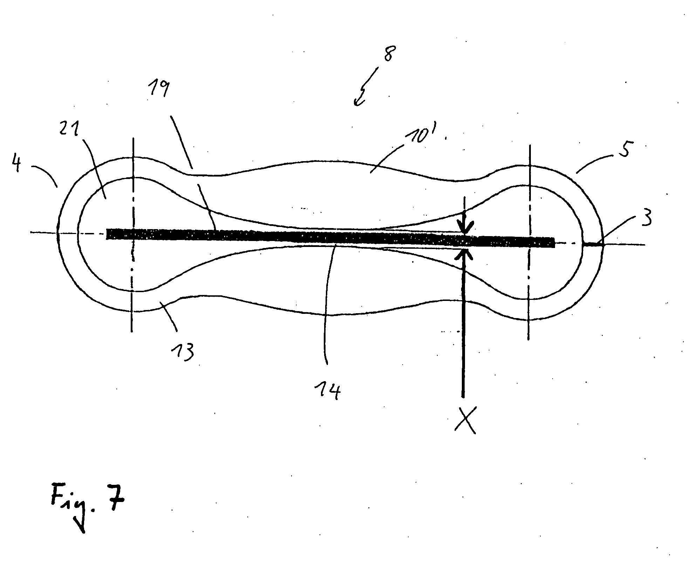

Die Fig. 7 zeigt die Ausführungsform gemäß Fig. 5 mit einem darin aufgenommenen Flachbandkabel 19, das in einer Mittelebene des Wellschlauches 8 verläuft. Die Dicke X des Flachbandkabels 19 kann der lichten Weite der zentralen Aufnahme 14 im Ruhezustand entsprechen oder größer als diese sein. Aufgrund der elastischen Eigenschaften des Wellschlauches und der Wölbung der Seitenwände im Bereich der zentralen Aufnahme 14 würde das Flachbandkabel 19 im letzteren Fall geklemmt werden. Natürlich kann die Dicke X des Flachbandkabels 19 auch kleiner sein als die lichte Weite des Wellschlauches im Bereich der zentralen Aufnahme 14.

Die Fig. 8a bis 8c zeigen eine dritte Ausführungsform einer Wellschlauchanordnung gemäß der vorliegenden Erfindung in einem Querschnitt ohne Verbindungsmittel und in dem Wellschlauch aufgenommene Leitungen, in einem Längsschlitz entlang der Linie A-A gemäß Fig. 8a sowie in einem Querschnitt mit einem aufgesetzten Verbindungsmittel 2 und einem von der Wellschlauchsanordnung aufgenommenen Flachbandkabel 19. Wie in Fig. 8a erkennbar, sind die beiden seitlichen Aufnahmen 21 tropfenförmig ausgebildet, mit einem auswärts gerichteten im wesentlichen kreisförmigen Abschnitt und einem einwärts gerichteten und im wesentlichen elliptisch auslaufenden Abschnitt. Im zentralen Bereich verlaufen die Innenumfangsflächen des Wellschlauches 8 im wesentlichen parallel zueinander und bilden zwei Klemm- bzw. Aufnahmebereiche 16 aus. Die so insgesamt ausgebildete zentrale Aufnahme eignet sich speziell zur Aufnahme von Flachbandkabeln, wie schematisch in Fig. 8c dargestellt. Je nach Wahl der lichten Weite der Klemm- bzw. Aufnahmebereiche 16 im Ruhezustand des Wellschlauches kann das Flachbandkabel 19 von dem Wellschlauch 8 geklemmt oder frei darin liegend aufgenommen werden. Zum Einbringen des Flachbandkabels 19 wird der Wellschlauch 8 im Bereich des Schlitzes 3 scherenartig aufgeklappt. Durch Aufschieben des Verbindungsmittels 2 wird der Schlitz 3 abgedeckt. Die elastischen Eigenschaften des Verbindungsmittels 2 und/oder des Wellschlauches 8 können eine Klemmung des darin aufgenommen Flachbandkabels 19 fördern.

Wie vorstehend ausgeführt, kann der Wellschlauch 8 in Bereichen, wo Verbindungsmittel 2 auf jeweilige Schmalseiten 4, 5 aufgesetzt werden, mit Wellungen 23 versehen sein, wie schematisch in Fig. 1 angedeutet. Diese Wellungen 23 können ein oder mehrere Wellenberge und/oder Wellentäler umfassen. Auf dem Innenumfang des jeweiligen Verbindungsmittels 2 können hierzu korrespondierend ausgebildete Wellungen ausgebildet sein, die formschlüssig in die entsprechenden Wellungen auf dem Wellschlauch 8 eingreifen. Somit kann in einfacher Weise ein axiales Verschieben des Verbindungsmittels 2 auf dem Wellschlauch 8 verhindert werden. Die Wellungen 23 erstrecken sich bevorzugt um den gesamten Umfang des Wellschlauchs 8, wie schematisch im vorderen Teil von Fig. 1 angedeutet. Sie können selbstverständlich auch nur an den jeweiligen mit Verbindungsmitteln 2 zu versehenen Schmalseiten 4, 5 vorgesehen sein, wie im hinteren Bildteil von Fig. 1 angedeutet. Ganz besonders bevorzugt sind die Wellungen zumindest in Bereichen zwischen aufzusetzenden Verbindungsmitteln 2 vorgesehen, so dass zumindest dort der Wellschlauch 8 in einfacher Weise gebogen werden kann.

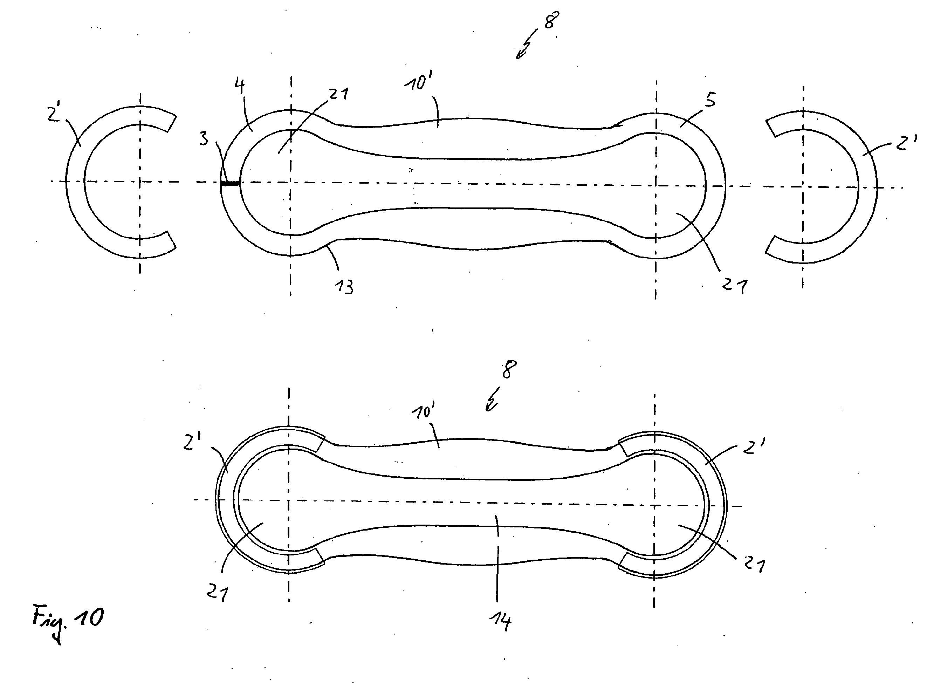

Die Fig. 10 zeigt eine weitere Variante mit zwei seitlich beziehungsweise auf die Schmalseite 4, 5 aufgesetzte Verbindungsmittel 2. Diese können gleichzeitig auch als Befestigungsmittel für die gesamte Wellschlauchanordnung dienen und zu diesem Zweck mit geeigneten Halte- bzw. Befestigungsmitteln etc. versehen sein. Dies gilt selbstverständlich für sämtliche erfindungsgemäße Ausführungsformen.

Aufgrund der Wellungen kann die erfindungsgemäße Wellschlauchanordnung nahezu beliebig gebogen werden. Der Wellschlauch 8 dient dabei gleichzeitig als mechanischer Schutz und als Führung der darin aufgenommen Leitungen. Somit ist die erfindungsgemäße Wellschlauchanordnung besonders geeignet zum Verlegen von Leitungen, beispielsweise im Fahrzeugbau, Flugzeugbau, Maschinenbau etc. Bevorzugt sind der Wellschlauch und das Verbindungsmittel aus elastischen Materialien gebildet, ganz besonders bevorzugt aus üblichen Kunststoffmaterialien, beispielsweise aus PE. Sowohl der Wellschlauch als auch die Verbindungsmittel können als Endlosmaterial von geeigneter geometrischer Grundform hergestellt und ausgeliefert werden. Eine ganz besonders bevorzugte Herstellungsmethode ist das Extrudieren einer Kunststoffmasse zu geeigneten Grundkörpern. Der Wellschlauch 8 wird zur Ausbildung des Schlitzes 3 mit einer einfachen Schneidevorrichtung, beispielsweise Messer, längs geschlitzt. Der Längsschlitz kann nahezu beliebig in Längsrichtung des Wellschlauches 8 geführt werden, sollte jedoch abschnittsweise entlang von jeweiligen Schmalseiten 4, 5 oder dort, wo sich ein Scheitelpunkt des Wellschlauchprofils befindet, geführt werden, um ein Aufsetzen von entsprechenden Verbindungsmittelns 2 sicher zu stellen. An nicht von Verbindungsmitteln 2 abgedeckten Bereichen können die von dem Wellschlauch 8 aufgenommenen Leitungen herausgeführt werden. Somit können bei geeigneter Wahl des Verlaufs des Längsschlitzes die Leitungen erfindungsgemäß nahezu beliebig aus dem Wellschlauch herausgeführt werden, was die erfindungsgemäße Wellschlauchanordnung ganz besonders geeignet zur Verwendung zum platzsparenden Verlegen von Leitungen macht, beispielsweise im Fahrzeug- oder Flugzeugbau. Natürlich brauchen die Verbindungsmittel nicht auf alle Schmalseiten, wo gerade der Längsschlitz verläuft, aufgesetzt werden, so dass die Leitungen oder Kabel auch dort herausgeführt werden können.

Selbstverständlich kann der Längsschlitz 3 im Bereich einer Schmalseite 4, 5 bzw. dort, wo sich ein Scheitelpunkt des Wellschlauchprofils befindet, auch so ausgebildet sein, dass im Ruhezustand des Wellschlauches ein Spalt zwischen den beiden Seitenrändern des Wellschlauches bestehen bleibt. In diesem Fall wird das Einführen der Kabel bzw. Leitungen in die Aufnahme erleichtert. Bevorzugt drückt das Verbindungsmittel 2 die beiden Seitenränder beim Aufsetzen so zusammen, dass diese im Montagezustand, d.h. mit aufgesetztem Verbindungsmittel 2, gegeneinander anliegen. Selbstverständlich können die beiden Seitenränder zu beiden Seiten des Längsschlitzes 3 im entspannten Zustand des Wellschlauches auch geringfügig überlappen, wobei etwa vorgesehene Wellentäler bzw. Wellenberge so korrespondierend zueinander ausgebildet sind, dass die entsprechenden Wandbereiche, die überlappen, ohne weiteres ineinander gleiten können.

Bevorzugt ist das kappenartige Verbindungsmittel 2 derart flexibel ausgebildet, dass es sich dem Verlauf des Wellschlauches 8 ohne weiteres anpassen kann. Das Verbindungsmittel 2 kann aus dem selben Material hergestellt sein wie der Wellschlauch oder auch aus einem weicheren bzw. flexibleren Material.

Grundsätzlich kann das Verbindungsmittel 2 jedoch auch aus einem steiferen Material als der Wellschlauch 8 hergestellt sein, um als Versteifung zu dienen, beispielsweise um einen vorgegebenen Verlauf der Wellschlauchanordnung im Montagezustand, d.h. mit aufgesetzten Verbindungsmitteln 2, sicherzustellen. Selbstverständlich kann durch die Form des Verbindungsmittels 2 der Wellschlauchanordnung auch eine vordefinierte Form verliehen werden. Hierzu weist das Verbindungsmittel 2 einen vordefinierten, gebogenen Verlauf auf, beispielsweise in Form eines 90°-Winkelstücks, eines Kreisbogens mit Öffnungswinkel zwischen 0 und 90°.

Selbstverständlich kann das kappenartige Verbindungsmittel 2 auch der Fixierung der Wellschlauchanordnung dienen. Hierzu können auf der Außenseite des Verbindungsmittels 2 geeignete Befestigungs- oder Montagemittel vorgesehen sein, beispielsweise Halteklipps und dergleichen.

Durch einfaches Längsschlitzen bzw. Ausschneiden von Seitenwänden aus dem Grundkörper des Verbindungsmittels können geeignet ausgebildete Verbindungsmittel in einfacher Weise hergestellt werden. Somit ist ersichtlich, dass beide Grundkörper auch unabhängig voneinander bevorratet und vertrieben werden können. Die besondere Verwendung solcher einfacher geometrischer Grundkörper für die erfindungsgemäße Wellschlauchanordnung soll deshalb unter den Schutzbereich der beigefügten Patentansprüche fallen.

## Patentansprüche

1. Wellschlauchanordnung zur Aufnahme von Leitungen (9, 19), umfassend einen Wellschlauch (8), welcher ein nicht-kreisförmiges Profil mit zumindest einer Schmalseite (4, 5) oder mit zumindest einem Scheitelpunkt und einen insgesamt in Längsrichtung verlaufenden Schlitz (3) aufweist, und ein Verbindungsmittel (2) zur Verbindung der sich entlang des Schlitzes erstreckenden Seitenränder des Wellschlauches (8) im Bereich der zumindest einen Schmalseite (4, 5) oder des zumindest einen Scheitelpunkts, **dadurch gekennzeichnet, dass** der Schlitz (3) abschnittsweise im Bereich der zumindest einen Schmalseite oder des zumindest einen Scheitelpunkts verläuft, wobei das rohrförmig ausgebildete Verbindungsmittel (2) mit einem Haltemittel (13) und einem Längsschlitz versehen ist, so dass es im Bereich der zumindest einen Schmalseite oder des zumindest einen Scheitelpunkts auf den Wellschlauch (8) aufsetzbar ist.

2. Wellschlauchanordnung nach Anspruch 1, bei dem im Bereich der Schmalseite (4, 5) oder Scheitelpunkt das Haltemittel (13) vorgesehen ist, um ein seitliches Abziehen des Verbindungsmittels (2) zu behindern.

3. Wellschlauchanordnung nach Anspruch 1 oder 2, bei dem das Haltemittel (13) so ausgebildet ist, dass das Verbindungsmittel (2) kraftschlüssig auf dem Wellschlauch (8) gehalten wird.

4. Wellschlauchanordnung nach Anspruch 3, bei der Seitenränder des Verbindungsmittels (2) in einem das Haltemittel ausbildenden Klemmbereich (13) die Seitenränder des Wellschlauchs (8) kraftschlüssig klemmen.

5. Wellschlauchanordnung nach Anspruch 4, bei der das Verbindungsmittel (2) ein im Wesentlichen kreisförmiges Profil aufweist, wobei ein Öffnungswinkel des Längsschlitzes des kreisförmigen Profils kleiner als 180° ist, bevorzugt im Bereich zwischen 60° und 100° liegt, bevorzugter im Bereich zwischen 70° und 90° liegt und noch bevorzugter etwa 80° beträgt.

6. Wellschlauchanordnung nach einem der Ansprüche 2 bis 5, bei der das Verbindungsmittel (2) an beiden Seiten des Längsschlitzes Erhöhungen und Vertiefungen aufweist, die formschlüssig in hierzu korrespondierende Vertiefungen und Erhöhungen auf dem Wellschlauch (8) im Bereich der zumindest einen Schmalseite oder des zumindest einen Scheitelpunktes eingreifen.

7. Wellschlauchanordnung nach einem der Ansprüche 3 bis 6, bei der der Wellschlauch (8) im Bereich der zumindest einen Schmalseite oder des zumindest einen Scheitelpunkts sich in Längsrichtung erstreckende Umfangsvorsprünge aufweist, die von Seitenrändern des Verbindungsmittels (2) hintergriffen werden.

8. Wellschlauchanordnung nach einem der vorhergehenden Ansprüche, bei der zu beiden Seiten des Schlitzes (3) im Bereich der zumindest einen Schmalseite oder des zumindest einen Scheitelpunkts sich im wesentlichen in Längsrichtung erstreckende Erhebungen vorgesehen sind, die als Anschlagmittel für Seitenränder des mit einem Längsschlitz versehenen Verbindungsmittels (2) dienen, um eine Verdrehsicherung des Verbindungsmittels (2) zu bewirken.

9. Wellschlauchanordnung nach einem der Ansprüche 1 bis 7, bei der zu beiden Seiten des Schlitzes (3) im Bereich der zumindest einen Schmalseite oder Scheitelpunkt sich im Wesentlichen in Längsrichtung des Wellschlauches (8) erstreckende Vertiefungen vorgesehen sind, wobei Seitenränder des mit einem Längsschlitz versehenen Verbindungsmittel (2) jeweils eine Kante im Bereich der Vertiefung hintergreifen, um eine Verdrehsicherung des Verbindungsmittels (2) zu bewirken.

10. Wellschlauchanordnung nach einem der vorhergehenden Ansprüche, bei der das Verbindungsmittel (2) zumindest abschnittsweise Wellungen aufweist, die formschlüssig in hierzu korrespondierende Wellungen des Wellschlauches (8) im Bereich der zumindest einen Schmalseite (4, 5) oder des zumindest einen Scheitelpunkts eingreifen.

11. Wellschlauchanordnung nach einem der vorhergehenden Ansprüche, bei der der Wellschlauch (8) ein im Wesentlichen rechteckförmiges Profil aufweist.

12. Wellschlauchanordnung nach einem der Ansprüche 1 bis 10, bei der der Wellschlauch (8) entlang zumindest einer Schmalseite (4, 5) oder zumindest eines Scheitelpunkts im Wesentlichen kreisförmig abgeschlossen ist, um eine sich in Längsrichtung des Wellschlauches erstreckende seitliche Aufnahme (21) auszubilden.

13. Wellschlauchanordnung nach dem vorhergehenden Anspruch, bei der der Kreisbogenwinkel der zumindest einen seitlichen Aufnahme (21) größer als 180° ist, bevorzugt im Bereich von 260° bis 300° liegt, bevorzugter im Bereich von 270° bis 290° liegt und noch bevorzugter etwa 280° beträgt.

14. Wellschlauchanordnung nach einem der vorhergehenden Ansprüche, bei der der Wellschlauch (8) hundeknochenartig ausgebildet ist, mit zwei seitlichen Aufnahmen (21) entlang von zwei Schmalseiten (4, 5) oder Scheitelpunkten des Wellschlauches (8) und einem zentralen Aufnahmebereich (14) zur Aufnahme von Leitungen (9, 19).

15. Wellschlauchanordnung nach einem der vorhergehenden Ansprüche, bei der Seitenwände des Wellschlauches (8) in einem zentralen Bereich (14) konkav gewölbt sind, um eine Aufnahme (14) zur Aufnahme von Leitungen (9, 19) auszubilden, und um in dem zentralen Bereich (14) aufgenommene Leitungen (9, 19) zu klemmen.

16. Wellschlauchanordnung nach einem der Ansprüche 3 bis 14, bei der die Seitenwände des Wellschlauches (8) im zentralen Bereich (14) im Wesentlichen parallel zueinander verlaufende Klemmflächen ausbilden.

17. Wellschlauchanordnung nach dem vorhergehenden Anspruch, bei der die Klemmflächen zumindest eine Längsnut (17) aufweisen, die sich in Längsrichtung des Wellschlauchs (8) erstreckt.

18. Wellschlauchanordnung nach einem der vorhergehenden Ansprüche, bei der die Wandstärke (20) in dem zentralen Bereich (14) geringer ist als im Bereich der zumindest einen Schmalseite (4, 5) oder des zumindest einen Scheitelpunkts.

19. Wellschlauchanordnung nach eine der vorhergehenden Ansprüche, bei der Wellungen (10') in einem zentralen Bereich (14) höher sind als im Bereich der zumindest einen Schmalseite (4, 5) oder des zumindest einen Scheitelpunkts.

20. Wellschlauchanordnung nach einem der vorhergehenden Ansprüche, bei der der Schlitz (3) des Wellschlauches (8) zickzackförmig oder wendeltreppenartig zwischen einer Schmalseite (4) oder einem Scheitelpunkt des Wellschlauches (8) und einer gegenüberliegenden Schmalseite (5) oder Scheitelpunkt des Wellschlauches (8) verläuft.

21. Verwendung eines Wellschlauchs, der zumindest abschnittsweise mit Wellungen versehen ist, ein im Wesentlichen kreisförmiges Profil aufweist und einen Längsschlitz aufweist, als Verbindungsmittel (2) in einer Wellschlauchanordnung (1) nach einem der vorhergehenden Ansprüche.

22. Verwendung eines Wellschlauchs, zur Aufnahme von Leitungen (9, 19), der ein nicht-kreisförmiges Profil mit zumindest einer Schmalseite (4, 5) oder zumindest einem Scheitelpunkt und einen insgesamt in Längsrichtung verlaufenden Längsschlitz aufweist, in einer Wellschlauchanordnung (1) nach einem der vorhergehenden Ansprüche.

## Claims

1. Corrugated tubing arrangement for accommodating cables (9, 19), comprising a corrugated tube (8) which has a non-circular profile with at least one narrow side (4, 5) or with at least one apex and a slit (3) extending generally in the longitudinal direction, and a connecting means (2) for connecting the side edges of the corrugated tube (8) extending along the slit in the region of the at least one narrow side (4, 5) or the at least one apex, **characterised in that** the slit (3) extends in the region of the at least one narrow end or at least one apex in certain regions, and the tubular connecting means (2) is provided with a retaining means (13) and a longitudinal slit so that it can be fitted on the corrugated tube (8) in the region of the at least one narrow end or the at least one apex.

2. Corrugated tubing arrangement as claimed in claim 1, in which the retaining means (13) is provided in the region of the narrow side (4, 5) or apex to prevent the connecting means (2) from being pulled off from the side.

3. Corrugated tubing arrangement as claimed in claim 1 or 2, in which the retaining means (13) is designed so that the connecting means is held on the corrugated tube (8) in a friction fitting arrangement.

4. Corrugated tubing arrangement as claimed in claim 3, in which the side edges of the connecting means (2) clamp the side edges of the corrugated tube (8) in a friction fitting arrangement in a clamping region (13) constituting the retaining means.

5. Corrugated tubing arrangement as claimed in claim 4, in which the connecting means (2) has an essentially circular profile, and an opening angle of the longitudinal slit of the circular profile is smaller than 180°, preferably in the range of between 60° and 100°, more preferably in the range of between 70° and 90° and even more preferably approximately 80°.

6. Corrugated tubing arrangement as claimed in one of claims 2 to 5, in which the connecting means (2) has raised areas and recesses on both sides of the longitudinal slit, which locate in complementary recesses and raised areas on the corrugated tube (8) in the region of the at least one narrow side or the at least one apex.

7. Corrugated tubing arrangement as claimed in one of claims 3 to 6, in which the corrugated tube (8) has circumferential projections extending in the longitudinal direction in the region of the at least one narrow side or the at least one apex which locate behind side edges of the connecting means (2).

8. Corrugated tubing arrangement as claimed in one of the preceding claims, in which raised areas extending essentially in the longitudinal direction are provided in the region of the at least one narrow side or the at least one apex, which act as stop means for side edges of the connecting means (2) provided with a longitudinal slit in order to prevent the connecting means (2) from twisting.

9. Corrugated tubing arrangement as claimed in one of claims 1 to 7, in which recesses extending essentially in the longitudinal direction of the corrugated tube (8) are provided on both sides of the slit (3) in the region of the at least one narrow end or apex, and side edges of the connecting means (2) provided with a longitudinal slit locate respectively behind an edge in the region of the recess in order to prevent the connecting means (2) from twisting.

10. Corrugated tubing arrangement as claimed in one of the preceding claims, in which the connecting means (2) has corrugations in at least certain regions, which locate in a positively fitting arrangement in complementary corrugations of the corrugated tube (8) in the region of the at least one narrow end (4, 5) or the at least one apex.

11. Corrugated tubing arrangement as claimed in one of the preceding claims, in which the corrugated tube (8) has an essentially rectangular profile.

12. Corrugated tubing arrangement as claimed in one of claims 1 to 10, in which the corrugated tube (8) has an essentially circular termination along at least one narrow side (4, 5) or at least one apex in order to form a lateral housing (21) extending in the longitudinal direction of the corrugated tube.

13. Corrugated tubing arrangement as claimed in the preceding claim, in which the circle arc angle of the at least one lateral housing (21) is bigger than 180°, preferably in the range of 260° to 300°, more preferably in the range of 270° to 290° and even more preferably approximately 280°.

14. Corrugated tubing arrangement as claimed in one of the preceding claims, in which the corrugated tube (8) has the shape of a dog's bone, with two lateral housings (21) along two narrow sides (4, 5) or apexes of the corrugated tube (8) and a central housing region (14) for housing cables (9, 19).

15. Corrugated tubing arrangement as claimed in one of the preceding claims, in which side walls of the corrugated tube (8) are concavely cambered in a central region (14) in order to form a housing (14) for housing cables (9, 19) and in order to clamp housed cables (9, 19) in the central region (14).

16. Corrugated tubing arrangement as claimed in one of claims 3 to 14, in which the side walls of the corrugated tube (8) form clamping surfaces in the central region (14) extending essentially parallel with one another.

17. Corrugated tubing arrangement as claimed in the preceding claim, in which the clamping surfaces have at least one longitudinal groove (17), which extends in the longitudinal direction of the corrugated tube (8).

18. Corrugated tubing arrangement as claimed in one of the preceding claims, in which the wall thickness (20) in the central region (14) is slimmer than in the region of the at least one narrow side (4, 5) or the at least one apex.

19. Corrugated tubing arrangement as claimed in one of the preceding claims, in which corrugations (10') in a central region (14) are higher than in the region of the at least one narrow side (4, 5) or the at least one apex.

20. Corrugated tubing arrangement as claimed in one of the preceding claims, in which the slit (3) of the corrugated tube (8) extends in a zigzag pattern or spiral staircase pattern between a narrow side (4) or an apex of the corrugated tube (8) and an oppositely lying narrow side (5) or apex of the corrugated tube (8).

21. Use of a corrugated tube which is provided with corrugations in at least certain regions and has an essentially circular profile and a longitudinal slit as a connecting means (2) in a corrugated tubing arrangement (1) as claimed in one of the preceding claims.

22. Use of a corrugated tube for accommodating cables (9, 19), which has a non-circular profile with at least one narrow side (4, 5) or at least one apex and a longitudinal slit extending generally in the longitudinal direction, in a corrugated tubing arrangement (1) as claimed in one of the preceding claims.

## Revendications

1. Agencement de tube ondulé destiné à recevoir des conduites (9, 19), incluant un tube ondulé (8) ayant un profil non circulaire avec au moins un côté étroit (4, 5) ou au moins un sommet et une fente (3) s'étendant entièrement dans la direction longitudinale, et des moyens de liaison (2) pour relier les bords latéraux du tube ondulé (8) s'étendant le long de la fente dans la zone du au moins un côté étroit (4, 5) ou du au moins un sommet, **caractérisé en ce que** la fente (3) s'étend, dans certaines parties, dans la zone du au moins un côté étroit ou du au moins un sommet, les moyens de liaison de forme tubulaire (2) étant munis de moyens de retenue (13) et d'une fente longitudinale de telle sorte qu'ils peuvent être placés sur le tube ondulé (8) dans la zone du au moins un côté étroit ou du au moins un sommet.

2. Agencement de tube ondulé selon la revendication 1, dans lequel les moyens de retenue (13) sont prévus dans la zone du côté étroit (4, 5) ou du sommet de manière à empêcher un retrait latéral des moyens de liaison (2).

3. Agencement de tube ondulé selon la revendication 1 ou 2, dans lequel les moyens de retenue (13) sont conçus de telle sorte que les moyens de liaison (2) sont maintenus à force sur le tube ondulé (8).

4. Agencement de tube ondulé selon la revendication 3, dans lequel des bords latéraux des moyens de liaison (2) serrent à force les bords latéraux du tube ondulé (8) dans une zone de serrage (13) formant les moyens de retenue.

5. Agencement de tube ondulé selon la revendication 4, dans lequel les moyens de liaison (2) ont un profil sensiblement circulaire, un angle d'ouverture de la fente longitudinale du profil circulaire étant inférieur à 180°, de préférence dans la plage entre 60° et 100°, de manière plus préférée dans la plage entre 70° et 90° et de manière encore plus préférée de 80° environ.

6. Agencement de tube ondulé selon l'une quelconque des revendications 2 à 5, dans lequel les moyens de liaison (2) comportent des saillies et des évidements des deux côtés de la fente longitudinale, lesquels saillies et évidements viennent en prise par complémentarité de formes avec des évidements et des saillies correspondant à ceux-ci sur le tube ondulé (8) dans la zone du au moins un côté étroit ou du au moins un sommet.

7. Agencement de tube ondulé selon l'une quelconque des revendications 3 à 6, dans lequel le tube ondulé (8) comporte des saillies circonférentielles s'étendant dans la direction longitudinale dans la zone du au moins un côté étroit ou du au moins un sommet, lesquelles saillies viennent en prise arrière avec des bords latéraux des moyens de liaison (2).

8. Agencement de tube ondulé selon l'une quelconque des revendications précédentes, dans lequel des saillies s'étendant sensiblement dans la direction longitudinale sont prévues des deux côtés de la fente (3) dans la zone du au moins un côté étroit ou du au moins un sommet, lesquelles saillies servent de moyens de butée pour des bords latéraux des moyens de liaison (2) munis d'une fente longitudinale de manière à empêcher une rotation des moyens de liaison (2).

9. Agencement de tube ondulé selon l'une quelconque des revendications 1 à 7, dans lequel des évidements s'étendant sensiblement dans la direction longitudinale du tube ondulé (8) sont prévus des deux côtés de la fente (3) dans la zone du au moins un côté étroit ou sommet, des bords latéraux des moyens de liaison (2) munis d'une fente longitudinale étant respectivement en prise arrière avec un bord dans la zone de l'évidement de manière à empêcher une rotation des moyens de liaison (2).

10. Agencement de tube ondulé selon l'une quelconque des revendications précédentes, dans lequel les moyens de liaison (2) comportent des ondulations au moins dans certaines parties, lesquelles ondulations viennent en prise par complémentarité de formes avec des ondulations du tube ondulé (8) correspondant à ceux-ci dans la zone du au moins un côté étroit (4, 5) ou du au moins un sommet.

11. Agencement de tube ondulé selon l'une quelconque des revendications précédentes, dans lequel le tube ondulé (8) a un profil sensiblement rectangulaire.

12. Agencement de tube ondulé selon l'une quelconque des revendications 1 à 10, dans lequel le tube ondulé (8) est fermé de manière sensiblement circulaire le long d'au moins un côté étroit (4, 5) ou d'au moins un sommet pour former un logement latéral (21) s'étendant dans la direction longitudinale du tube ondulé.

13. Agencement de tube ondulé selon la revendication précédente, dans lequel l'angle d'arc de cercle du au moins un logement latéral (21) est supérieur à 180°, de préférence dans la plage de 260° à 300°, de manière plus préférée dans la plage de 270° à 290° et de manière encore plus préférée de 280° environ.

14. Agencement de tube ondulé selon l'une quelconque des revendications précédentes, dans lequel le tube ondulé (8) est formé à la manière d'un os de chien, avec deux logements latéraux (21) le long de deux côtés étroits (4, 5) ou sommets du tube ondulé (8) et une zone de logement centrale (14) pour recevoir des conduites (9, 19).

15. Agencement de tube ondulé selon l'une quelconque des revendications précédentes, dans lequel des parois latérales du tube ondulé (8) sont incurvées de manière concave dans une zone centrale (14) de manière à former un logement (14) pour recevoir des conduites (9, 19) et à serrer les conduites (9, 19) reçues dans la zone centrale (14).

16. Agencement de tube ondulé selon l'une quelconque des revendications 3 à 14, dans lequel les parois latérales du tube ondulé (8) s'étendant de manière sensiblement parallèle les unes aux autres dans la zone centrale (14) forment des surfaces de serrage.

17. Agencement de tube ondulé selon la revendication précédente, dans lequel les surfaces de serrage comportent au moins une rainure longitudinale (17) qui s'étend dans la direction longitudinale du tube ondulé (8) .

18. Agencement de tube ondulé selon l'une quelconque des revendications précédentes, dans lequel l'épaisseur de paroi (20) dans la zone centrale (14) est plus petite que dans la zone du au moins un côté étroit (4, 5) ou du au moins un sommet.

19. Agencement de tube ondulé selon l'une quelconque des revendications précédentes, dans lequel des ondulations (10') dans une zone centrale (14) sont plus hautes que dans la zone du au moins un côté étroit (4, 5) ou du au moins un sommet.

20. Agencement de tube ondulé selon l'une quelconque des revendications précédentes, dans lequel la fente (3) du tube ondulé (8) s'étend en forme de zigzag ou en forme d'escalier tournant entre un côté étroit (4) ou un sommet du tube ondulé (8) et un côté étroit (5) ou un sommet opposé du tube ondulé (8).

21. Utilisation d'un tube ondulé muni d'ondulations au moins dans certaines parties, ayant un profil sensiblement circulaire et comportant une fente longitudinale, comme moyen de liaison (2) dans un agencement de tube ondulé (1) selon l'une quelconque des revendications précédentes.

22. Utilisation d'un tube ondulé pour recevoir des conduites (9, 19), lequel tube a un profil non circulaire avec au moins un côté étroit (4, 5) ou au moins un sommet et une fente longitudinale s'étendant entièrement dans la direction longitudinale, dans un agencement de tube ondulé (1) selon l'une quelconque des revendications précédentes.
